# EUROPEAN PATENT APPLICATION

(11) **EP 4 525 120 A1**
(43) Date of publication of application: **19.03.2025**
(21) Application number: 23803577.8
(22) Date of filing: 10.05.2023
(51) Int. Cl.: H01M 10/0567, H01M 10/052, H01M 10/0569

(54) **ELECTROLYTIC SOLUTION FOR LITHIUM ION SECONDARY BATTERY, AND LITHIUM ION SECONDARY BATTERY**

(30) Priority: 12.05.2022 JP 2022078983; 01.11.2022 JP 2022175494
(71) Applicant: Kyocera Corporation, Kyoto-shi, Kyoto 612-8501 (JP)
(72) Inventor: ABE, Koji, Ube-shi, Yamaguchi 755-8611 (JP); TODOROV, Yanko Marinov, Ube-shi, Yamaguchi 755-8611 (JP)
(74) Representative: TBK
(86) International application number: PCT/JP2023/017566
(87) International publication number: WO 2023/219102

(57) **Abstract**

An object of the present invention is to provide a lithium ion secondary battery excellent in cycle characteristics and additionally corrosion resistance which are important in a vehicle-mounted secondary battery such as an electric vehicle, and to provide an electrolytic solution capable of producing such a lithium ion secondary battery. An electrolytic solution for a lithium ion secondary battery, the electrolytic solution containing an electrolyte dissolved in a nonaqueous solvent, in which the electrolytic solution contains cyanomethyl formate and/or 2-cyanoethyl formate. A lithium ion secondary battery including a positive electrode, a negative electrode, a separator, and the electrolytic solution for a lithium ion secondary battery.

## Description

### TECHNICAL FIELD

The present invention relates to an electrolytic solution for a lithium ion secondary battery having excellent battery characteristics such as a battery cycle life and safety such as battery corrosion resistance, and a lithium ion secondary battery including the electrolytic solution.

### BACKGROUND OF INVENTION

In recent years, lithium ion secondary batteries (hereinafter also abbreviated as LIBs) have become higher in energy density and higher in voltage. In particular, lithium ion secondary batteries using a positive electrode of a lithium composite oxide containing Ni, a negative electrode of a graphite material or a titanium oxide such as Li₄Ti₅O₁₂ (hereinafter also abbreviated as LTO), and a nonaqueous electrolytic solution containing lithium bis(fluorosulfonyl)imide (hereinafter also abbreviated as LiFSI) as an electrolyte have been used as vehicle-mounted secondary batteries for the purpose of improving a long cycle life, high-temperature storage characteristics, and the like.

However, Patent Document 1 points out a problem that aluminum used as a positive electrode current collector of a lithium ion secondary battery is corroded when the battery is operated at a high voltage exceeding 4.2 V in a nonaqueous electrolytic solution containing an imide-based lithium salt such as LiFSI as an electrolyte.

Patent Document 2 proposes a lithium ion secondary battery exhibiting excellent cycle characteristics by using a nonaqueous electrolytic solution in which LiPF₆ or LiBF₄ as an electrolyte is dissolved in a nonaqueous solvent (for example, EC, PC, MEC, or the like), the nonaqueous electrolytic solution containing a formate.

However, the formate described in Patent Document 2 is a compound having a hydrocarbon group such as octyl formate, allyl formate, or 2-propynyl formate, and cyanomethyl formate and 2-cyanoethyl formate having a -C≡N group are nowhere disclosed in the patent literature. Patent Document 3 also does not describe cyanomethyl formate at all, and suggests an organic electrolytic solution using 2-cyanoethyl formate as a solvent (Example 1), but describes that cyanoalkyl formate can be used in applications of an electric double layer capacitor and an electrolytic capacitor, but is easily decomposed by a reaction with a lithium salt or charge/discharge, and is not suitable for a lithium battery and a lithium ion secondary battery (paragraph [0012]).

In general, an ester compound having any of formic acid, sulfuric acid, and a halogen element as strong acids may cause metal corrosion. When a lithium ion secondary battery using the compound in a nonaqueous electrolytic solution is exposed to a high voltage of exceeding 4.2 V or normal temperature or higher, care must be taken for corrosion.

### CITATION LIST

### PATENT LITERATURE

Patent Document 1: JP 2014-203748 A
Patent Document 2: JP 4899862 B
Patent Document 3: JP 4221088 B

### SUMMARY

### PROBLEM TO BE SOLVED

The present invention solves the problems mentioned above and provides a lithium ion secondary battery excellent in cycle characteristics and additionally corrosion resistance which are important in a vehicle-mounted secondary battery such as an electric vehicle. The present invention also provides an electrolytic solution capable of producing such a lithium ion secondary battery.

### SOLUTION TO PROBLEM

As a result of intensive studies, the present inventors have found that, in a lithium ion secondary battery including a positive electrode, a negative electrode, a separator, and a nonaqueous electrolytic solution in which an electrolyte is dissolved in a nonaqueous solvent, addition of cyanomethyl formate (hereinafter also abbreviated as CMF) and/or 2-cyanoethyl formate (hereinafter also abbreviated as CEF) into the nonaqueous electrolytic solution improves cycle characteristics of the battery, and that a lithium ion secondary battery having excellent corrosion resistance can be obtained. It has not been known at all that cyanomethyl formate and/or 2-cyanoethyl formate, when added to a nonaqueous solvent, can improve the cycle characteristics of the battery as an electrolytic solution for a lithium ion secondary battery, and that a battery having excellent corrosion resistance can be produced. The electrolytic solution found by the present inventors is an electrolytic solution for a lithium ion secondary battery for use as an electrolytic solution of a lithium ion secondary battery. A lithium ion secondary battery obtained by using this electrolytic solution for a lithium ion secondary battery has excellent corrosion resistance even when used at a high voltage exceeding 4.2 V, and has excellent corrosion resistance even when used at room temperature or higher.

Furthermore, the present inventors have found that the corrosion resistance of a lithium ion secondary battery can be further improved by combining one or more compounds selected from the group consisting of a phosphonate compound (I), a carbonate compound (II), an oxalate compound (III) and a methanesulfonate compound (IV) as described in the present invention with a nonaqueous electrolytic solution containing cyanomethyl formate and/or 2-cyanoethyl formate.

That is, the present invention is specified by the following.
(1) An electrolytic solution for a lithium ion secondary battery, the electrolytic solution containing an electrolyte dissolved in a nonaqueous solvent, in which the electrolytic solution contains cyanomethyl formate and/or 2-cyanoethyl formate.
(2) The electrolytic solution for a lithium ion secondary battery according to (1), in which the electrolytic solution contains at least one selected from the group consisting of:
   a phosphonate compound represented by Formula (I): 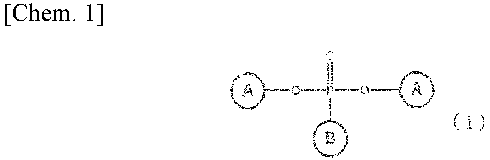
   where A and B are independent, A represents a methyl group, an ethyl group, a 2-cyanoethyl group, a 1-cyanoethyl group, a 2-cyano-2-propyl group, or a 2-propynyl group, and B represents a methyl group, an ethyl group, a vinyl group, or a cyanomethyl group;
   a carbonate compound represented by Formula (II): 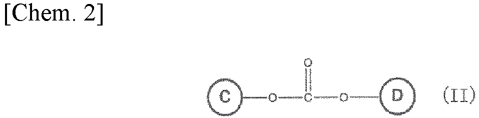
   where C and D are independent, C represents a methyl group or an ethyl group, and D represents a 2-cyanoethyl group, a 1-cyanoethyl group, a 2-cyano-2-propyl group, or a 2-propynyl group;
   an oxalate compound represented by Formula (III): 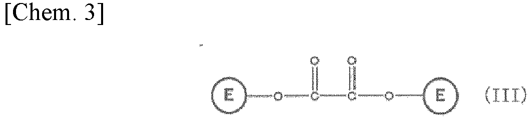
   where E represents a 2-cyanoethyl group, a 1-cyanoethyl group, a 2-cyano-2-propyl group, or a 2-propynyl group; and
   a methanesulfonate compound represented by Formula (IV): 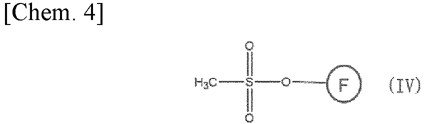
   where F represents a 2-cyanoethyl group, a 1-cyanoethyl group, a 2-cyano-2-propyl group, or a 2-propynyl group.
(3) The electrolytic solution for a lithium ion secondary battery according to (2), in which a total content of the phosphonate compound represented by Formula (I), the carbonate compound represented by Formula (II), the oxalate compound represented by Formula (III), and the methanesulfonate compound represented by Formula (IV) is from 0.01 to 10 mass%.
(4) A lithium ion secondary battery including a positive electrode, a negative electrode, a separator, and the electrolytic solution for a lithium ion secondary battery according to any one of (1) to (3).

### ADVANTAGEOUS EFFECT

In a lithium ion secondary battery including a positive electrode, a negative electrode, a separator, and a nonaqueous electrolytic solution in which an electrolyte is dissolved in a nonaqueous solvent, the nonaqueous electrolytic solution contains cyanomethyl formate and/or 2-cyanoethyl formate, whereby the electrolytic solution for a lithium ion secondary battery can improve cycle characteristics of the lithium ion secondary battery in the present invention. Thus, a lithium ion secondary battery having excellent cycle characteristics can be produced. In addition, the nonaqueous electrolytic solution contains cyanomethyl formate and/or 2-cyanoethyl formate, whereby the corrosion resistance of the lithium ion secondary battery can be improved. Thus, a lithium ion secondary battery having excellent corrosion resistance can be produced. Further, the electrolytic solution for a lithium ion secondary battery of the present invention contains one or more compounds selected from the group consisting of the phosphonate compound (I), the carbonate compound (II), the oxalate compound (III) and the methanesulfonate compound (IV) in the present invention in combination with cyanomethyl formate and/or 2-cyanoethyl formate, and thus can produce a lithium ion secondary battery further excellent in corrosion resistance.

### DESCRIPTION OF EMBODIMENTS

Hereinafter, embodiments and configurations of the present invention will be exemplified, but the present invention is not limited to these embodiments and configurations. All embodiments and configurations are included in the present invention as long as they are in accordance with the intention of the recitation of the claims, the descriptions of the solution to problem and the advantageous effect, and the like.

The nonaqueous electrolytic solution is composed of an electrolyte and a nonaqueous solvent. In the present invention, the electrolyte is not particularly limited, and examples thereof may include electrolyte salts such as lithium salts such as: LiN(SO₂F)₂ (hereinafter, also abbreviated as LiFSI) and the like, having an SO₂ group; LiOSO₂F and the like, having an SO₃ group; LiOSO₃CH₃, LiOSO₃C₂H₅ and the like, having an SO₄ group; LiPF₆, LiPO₂F₂, lithium difluorobis(oxalato)phosphate (LiDFOP) and the like, having phosphorus (P); LiBF₄, lithium bis(oxalato)borate (LiBOB), and lithium difluoro(oxalato)borate (LiDFOB), having boron (B); and LiAsF₆ having arsenic (As). In the present invention, one electrolyte may be used, or two or more electrolytes may be mixed and used.

In the present invention, addition of cyanomethyl formate and/or 2-cyanoethyl formate to the nonaqueous electrolytic solution improves corrosion resistance to metals such as aluminum, and thus LiFSI having high chemical thermal stability and capable of improving battery performance at high temperatures can be used in many cases. The lithium salts may be used alone, or two or more of them may be used. Also, the addition of a certain amount of an Li salt other than LiFSI (hereinafter, also referred to as another Li salt) is preferable because the Li salt has an effect of supplementarily improving the battery performance at a low temperature. As a preferable combination of these lithium salts, a combination of two lithium salts, i.e., a lithium salt having an SO₂ group and a lithium salt having phosphorus (P), or a combination of three lithium salts, i.e., a lithium salt having an SO₂ group, a lithium salt having an SO₄ group, and a lithium salt having phosphorus (P) is preferable. Specifically, a combination of three lithium salts, LiFSI, LiPF₆ and LiPO₂F₂, or a combination of four lithium salts, LiFSI, LiOSO₃CH₃, LiPF₆ and LiPO₂F₂ is more preferable. When LiFSI and another Li salt are used, a mass ratio of LiFSI to another Li salt (LiFSI: another Li salt) is in a range of preferably from 100:0 to 1:99, more preferably from 100:0 to 50:50, and most preferably from 100:0 to 70:30. In addition, the electrolytes are dissolved at a total concentration in a range of preferably from 0.5 to 3 mol, and more preferably in a range of from 1 to 2 mol relative to a total volume of 1 L of the electrolytic solution for a lithium ion secondary battery according to the present invention.

In the present invention, the nonaqueous solvent is not particularly limited, and examples thereof may include a cyclic carbonate and a chain carbonate. Suitable examples of the cyclic carbonate include ethylene carbonate (EC), fluoroethylene carbonate (FEC), vinylene carbonate (VC), and propylene carbonate (PC). Suitable examples of the chain carbonate include dimethyl carbonate (DMC), ethyl methyl carbonate (EMC), and diethyl carbonate (DEC). As the nonaqueous solvent in the present invention, the solvent may be used as a main solvent, and another solvent may be mixed as an auxiliary solvent. Suitable examples of another auxiliary solvent used by mixing with the main solvent include cyclic compounds having an effect of improving ion conductivity, such as γ-butyrolactone and 1,3-propane sultone (PS), and chain compounds having a viscosity lower than that of DMC, such as ethyl formate, propyl formate, isopropyl formate and propargyl formate (2-propynyl formate).

These resins may be used alone, or two or more of them may be used in combination. Examples of a suitable combination of these two cyclic carbonates may include a combination of EC and VC, a combination of EC and FEC, a combination of PC and FEC, a combination of EC and PC, and a combination of PC and DMC, and another solvent may be added to the combination of these two cyclic carbonates. Examples of a combination of three cyclic carbonates may include a combination of EC, PC, and VC, a combination of EC, PC, and FEC, a combination of EC, PC, and DMC, and a combination of EC, EMC, and DMC, and the like, and another solvent may be added to the combination of these three cyclic carbonates. Examples of a combination of four cyclic carbonates may include a combination of EC, PC, FEC and VC and a combination of EC, PC, DMC and EMC, and another solvent may be added to the combination of these four cyclic carbonates.

When the cyclic carbonate of the nonaqueous electrolytic solution includes a chain carbonate in the present invention, a ratio of the cyclic carbonate to the chain carbonate (cyclic carbonate: chain carbonate (volume ratio)) is preferably from 10:90 to 50:50, and more preferably from 20:80 to 40:60, from the viewpoint of improving electrochemical characteristics over a wide temperature range from a high temperature to a low temperature.

The cyanomethyl formate used in the present invention has two characteristics. First, it has a molecular weight lower than a molecular weight of DMC of 90 used as one of the main solvents. The molecular weight is 85, which is lower than a molecular weight of VC of 86 which is an additive currently used worldwide. Since a molar amount of the additive electrochemically acts, it is important, from the viewpoint of performance and cost, that a high effect due to addition can be obtained with a small added amount. Second, an oxidative decomposition potential of VC is 4.85 V while that of cyanomethyl formate is 5.4 V, and a reductive decomposition potential of VC is 0.8 V while that of cyanomethyl formate is 1.1 V. From these facts, cyanomethyl formate is a compound which is more difficult to oxidatively decompose and more easily reduced than VC. At present, it is important that oxidative decomposition does not easily occur on an Ni positive electrode in the course of increasing the voltage, and it is advantageous in terms of performance to form a protective film by early reductive decomposition on a highly active graphite negative electrode.

In the present invention, a content of cyanomethyl formate and/or 2-cyanoethyl formate in the electrolytic solution for a lithium ion secondary battery is not particularly limited, but too low a content thereof results in insufficient formation of the protective film of the negative electrode. Thus, the cycle characteristics are deteriorated, and the corrosion resistance is affected. Therefore, an appropriate content of cyanomethyl formate and/or 2-cyanoethyl formate is preferably 0.01 mass% or more, and more preferably 0.1 mass% or more, and may be 0.5 mass% or more relative to a total mass of the electrolytic solution for a lithium ion secondary battery of the present invention. The upper limit is preferably 80 mass% or less, preferably 60 mass% or less, more preferably 30 mass% or less, still more preferably 10 mass% or less, and even still more preferably 5 mass% or less, and may be 3 mass% or less relative to the total mass of the electrolytic solution for a lithium ion secondary battery. Examples of a preferable range of the content of cyanomethyl formate and/or 2-cyanoethyl formate relative to the total mass of the electrolytic solution for a lithium ion secondary battery of the present invention may include from 0.01 to 80 mass%, from 0.01 to 60 mass%, from 0.01 to 30 mass%, from 0.01 to 10 mass%, from 0.01 to 5 mass%, from 0.01 to 3 mass%, from 0.1 to 80 mass%, from 0.1 to 60 mass%, from 0.1 to 30 mass%, from 0.1 to 10 mass%, from 0.1 to 5 mass%, from 0.1 to 3 mass%, from 0.5 to 10 mass%, from 0.5 to 5 mass%, and from 0.5 to 3 mass%. In the present invention, the nonaqueous electrolytic solution for a lithium ion secondary battery contains cyanomethyl formate and/or 2-cyanoethyl formate therein, and thus can improve cycle characteristics of the lithium ion secondary battery, when used in the lithium ion secondary battery. In addition, the corrosion resistance of the lithium ion secondary battery can be improved. The above numerical range for the content of cyanomethyl formate and/or 2-cyanoethyl formate indicates a numerical range for the content of cyanomethyl formate or 2-cyanoethyl formate when either one of them is used alone, and indicates a numerical range for a total content of cyanomethyl formate and 2-cyanoethyl formate when both of them are used.

In order to further improve the corrosion resistance of the lithium ion secondary battery, the electrolytic solution for a lithium ion secondary battery of the present invention preferably contains, in addition to cyanomethyl formate and/or 2-cyanoethyl formate, at least one compound selected from the group consisting of a phosphonate compound represented by Formula (I), a carbonate compound represented by Formula (II), an oxalate compound represented by Formula (III), and a methanesulfonate compound represented by Formula (IV). 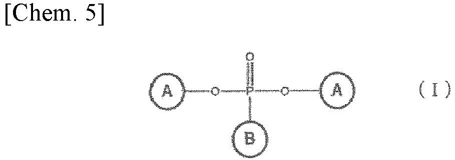 where A and B are independent, A represents a methyl group, an ethyl group, a 2-cyanoethyl group (propionitrile group), a 1-cyanoethyl group, a 2-cyano-2-propyl group, or a 2-propynyl group (propargyl group), and B represents a methyl group, an ethyl group, a vinyl group, or a cyanomethyl group.

24 phosphonate compounds represented by Formula (I) are shown in Table 1.

**[Table 1]**

| A | B |
|---|---|
| -CH₃ | -CH₃ |
| | -CH₂CH₃ |
| | -CH = CH₂ |
| | -CH₂C ≡ N |
| -CH₂CH₃ | -CH₃ |
| | -CH₂CH₃ |
| | -CH = CH₂ |
| | -CH₂C ≡ N |
| -CH₂CH₂C ≡ N | -CH₃ |
| | -CH₂CH₃ |
| | -CH = CH₂ |
| | -CH₂C ≡ N |
| -CH₂C ≡ CH | -CH₃ |
| | -CH₂CH₃ |
| | -CH = CH₂ |
| | -CH₂C ≡ N |
| -C(CH₃)₂C ≡ N | -CH₃ |
| | -CH₂CH₃ |
| | -CH = CH₂ |
| | -CH₂C ≡ N |
| -CH(CH₃)C≡N | -CH₃ |
| | -CH₂CH₃ |
| | -CH = CH₂ |
| | -CH₂C ≡ N |

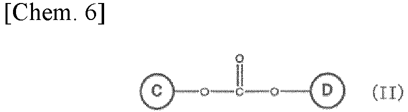

where C and D are independent, C represents a methyl group or an ethyl group, and D represents a 2-cyanoethyl group (propionitrile group), a 1-cyanoethyl group, a 2-cyano-2-propyl group, or a 2-propynyl group (propargyl group).

8 carbonate compounds represented by Formula (II) are shown in Table 2.

**[Table 2]**

| C | D |
|---|---|
| -CH₃ | -CH₂CH₂C ≡ N |
| | -C(CH₃)₂C ≡ N |
| | -CH(CH₃)C ≡ N |
| | -CF₂C ≡ CH |
| -CH₂CH₃ | -CH₂CH₂C ≡ N |
| | -C(CH₃)₂C ≡ N |
| | -CH(CH₃)C ≡ N |
| | -CH₂C ≡ CH |

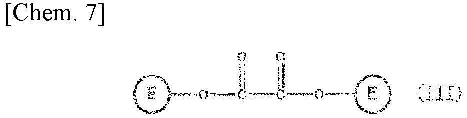

where E represents a 2-cyanoethyl group (propionitrile group), a 1-cyanoethyl group, a 2-cyano-2-propyl group, or a 2-propynyl group (propargyl group).

4 oxalate compounds represented by Formula (III) are shown in Table 3.

**[Table 3]**

| E |
|---|
| -CH₂CH₂C ≡ N |
| -C(CH₃)₂C ≡ N |
| -CH(CH₃)C ≡ N |
| -CH₂C ≡ CH |

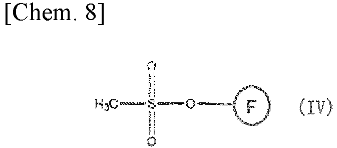

where F represents a 2-cyanoethyl group (propionitrile group), a 1-cyanoethyl group, a 2-cyano-2-propyl group, or a 2-propynyl group (propargyl group).

4 methanesulfonate compounds represented by Formula (IV) are shown in Table 4.

**[Table 4]**

| F |
|---|
| -CH₂CH₂C ≡ N |
| -C(CH₃)₂C ≡ N |
| -CH(CH₃)C ≡ N |
| -CH₂C ≡ CH |

The reason why the combined use of the above-mentioned phosphonate compound (I), carbonate compound (II), oxalate compound (III) and methanesulfonate compound (IV) is preferable is still no better than a conjecture, but is considered to be that a strong adsorption layer is formed on a surface of a metal such as aluminum to avoid contact with a corrosive compound. A total content of at least one kind selected from these 40 kinds, that is, one kind or a combination of two or more kinds is preferably 0.01 mass% or more, more preferably 0.1 mass% or more, and most preferably 0.5 mass% or more relative to the total mass of the electrolytic solution for a lithium ion secondary battery of the present invention. The upper limit is preferably 10 mass% or less, more preferably 8 mass% or less, and most preferably 5 mass% or less relative to the total mass of the electrolytic solution for a lithium ion secondary battery. A preferable range of the total content of these compounds can be, for example, from 0.01 to 10 mass%, from 0.1 to 8 mass%, or from 0.5 to 5 mass%, relative to the total mass of the electrolytic solution for a lithium ion secondary battery of the present invention. The electrolytic solution for a lithium ion secondary battery of the present invention contains at least one compound selected from the group consisting of the phosphonate compound, the carbonate compound, the oxalate compound, and the methanesulfonate compound in the present invention. Thus, the electrolytic solution for a lithium ion secondary battery, when used in a lithium ion secondary battery, can further improve the corrosion resistance of the lithium ion secondary battery, and, in particular, can further improve the corrosion resistance in use at a high voltage exceeding 4.2 V or in use at room temperature or higher. In addition to the electrolyte, the nonaqueous solvent, the cyanomethyl formate and/or 2-cyanoethyl formate, and the compounds represented by Formulae (I), (II), (III), and (IV), the electrolytic solution for a lithium ion secondary battery of the present invention may contain other components as long as the electrolytic solution can be used.

According to the present invention, even a nonaqueous electrolytic solution containing 1,3-propane sultone, which is usually highly corrosive and has been hesitated to be used, can be used without impairing the corrosion resistance of LIB. When a graphite negative electrode is used in a battery, 1,3-propane sultone has an effect of suppressing reductive decomposition of EC or PC on the graphite negative electrode, and thus is preferably added in an amount in a range of from 0.1 to 5 mass% relative to the entire nonaqueous electrolytic solution.

Further, according to the present invention, even a nonaqueous electrolytic solution containing a dinitrile having a carbon chain length of from 2 to 5, such as succinonitrile, glutaronitrile, adiponitrile, or pimelonitrile, an isocyanate such as hexamethylene diisocyanate (HMDI) or 1,3-bis(isocyanatemethyl)cyclohexane (mixture of cis-and trans-isomers), and a carbodiimide such as N,N'-diisopropylcarbodiimide (DIC) or N,N'-dicyclohexylcarbodiimide (DCC), which have an effect of suppressing corrosion, but have been hesitated to be used because the cycle characteristics deteriorate as added amounts thereof increase, can be used without impairing the cycle characteristics of LIB. These compounds are preferably added in a range of from 0.1 to 5 mass% relative to the entire nonaqueous electrolytic solution.

The lithium ion secondary battery of the present invention includes a positive electrode, a negative electrode, a separator, and the electrolytic solution for a lithium ion secondary battery of the present invention. In the present invention, the positive electrode, the negative electrode and the separator are not particularly limited as long as they can be used in a lithium ion secondary battery. In the present invention, the separator is most preferably a separator composed of a microporous film made of a polyolefin material such as polypropylene or polyethylene, but may also be a non-woven fabric separator. The porous sheet or the non-woven fabric may have a single-layer structure or a multi-layer structure, and the surface of the separator may be coated with an oxide such as alumina. The thickness of the separator needs to be as small as possible in order to increase the volume energy density of the battery. Therefore, the thickness is preferably 20 µm or less, and particularly preferably 10 µm or less.

In the present invention, in order to increase the volume energy density, a negative electrode active material used in the negative electrode is suitably, for example, a graphite material such as natural graphite or artificial graphite, or a carbon material such as hard carbon or soft carbon. In addition, in order to improve rapid charge/discharge, the negative electrode active material used is suitably a titanium oxide that does not expand or contract during charge/discharge, with examples thereof being a titanium oxide having a spinel structure such as Li₄Ti₅O₁₂ (LTO) and a titanium oxide such as TiNb₂O₇ and Ti₂Nb₁₀O₂₉.

A binder used in a negative electrode mixture material can be, for example, ethylene propylene diene terpolymer (EPDM), polytetrafluoroethylene (PTFE), polyvinylidene fluoride (PVDF), a copolymer of styrene and butadiene (SBR), a copolymer of acrylonitrile and butadiene (NBR), or carboxymethyl cellulose (CMC). The negative electrode is produced, for example, by kneading the negative electrode active material with the binder to prepare a negative electrode mixture material in the form of a slurry, applying the negative electrode mixture material to a copper foil or an aluminum foil as a current collector, drying the negative electrode mixture material, press-molding the negative electrode mixture material, and then heat-treating the negative electrode mixture material at 80°C under vacuum.

In the present invention, examples of a positive electrode active material used in the positive electrode include LiCoO₂ (LCO); LiCo_{1/3}Ni_{1/3}Mn_{1/3}O₂, LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), and LiNi_{0.8}Co_{0.15}Al_{0.05}O₂ (NCA), in which a part of Co is replaced by Ni or the like; and LiNi_{0.5}Mn_{1.5}O₄ and LiNi_{0.8}Mn_{0.13}Ti_{0.02}Mg_{0.02}Nb_{0.01}Mo_{0.02}O₂ (HE-LNMO), in which no Co is used. In order to increase the volume energy density, NCM523, NCM622, NCM811, NCA, HE-LNMO, or the like is suitably used as the positive electrode active material containing a lithium composite oxide in which Ni is 50% or more as an atomic ratio. In addition, in order to improve rapid charge/discharge, the positive electrode active material used is suitably LiMn₂O₄ (LMO) having a spinel structure or LiFePO₄ (LFP) having an olivine structure.

Examples of a conductive auxiliary used in the positive electrode mixture material may include known or commercially available conductive auxiliaries such as carbon black such as acetylene black and Ketjen black, carbon nanotube, carbon fiber, activated carbon, and graphite. Examples of the binder may include polytetrafluoroethylene (PTFE), polyvinylidene fluoride (PVFF), a copolymer of styrene and butadiene (SBR), a copolymer of acrylonitrile and butadiene (NBR), and carboxymethyl cellulose (CMC). The positive electrode is produced, for example, by kneading the positive electrode active material with the conductive auxiliary and the binder to prepare a positive electrode mixture material in the form of a slurry, applying the positive electrode mixture material to an aluminum foil as a current collector, drying the positive electrode mixture material, press-molding the positive electrode mixture material, and then heat-treating the positive electrode mixture material at 80°C under vacuum. If the battery can be assembled without using the binder, the binder may not be used.

In the present invention, in order to increase the volume energy density, suitable examples of a combination of the positive electrode active material and the negative electrode active material include combinations of LCO and graphite, NCM523 and graphite, NCM622 and graphite, NCM811 and graphite, NCA and graphite, and HE-LNMO and graphite. In addition, in order to improve rapid charge/discharge, a combination of NCM811 and LTO, HE-LNMO and LTO, LFP and LTO, or the like is suitably exemplified.

Other materials in the lithium ion secondary battery of the present invention are not particularly limited as long as they can be used in a lithium ion secondary battery. In the present invention, the current collector used is not limited, but is suitably an aluminum foil or a copper foil, and may be a porous current collector which further improves the permeability of the electrolytic solution.

In the present invention, the solvent used in the binder is also not particularly limited, and various solvents can be selected depending on the active material or the binder to be used. Specifically, when the binder is PVDF, the solvent is preferably N-methyl-2-pyrrolidone. Meanwhile, when the binder is a rubber-based binder such as styrene butadiene rubber (SBR), polytetrafluoroethylene, polyvinyl alcohol, or carboxymethyl cellulose (CMC), the solvent is suitably water.

In the present invention, the structure of the lithium secondary battery is not limited, but the secondary battery having a positive electrode, a negative electrode, and a separator may have the shape of, for example, a coin-type battery, a cylindrical battery, a prismatic battery, or a pouch-type battery. The present invention is also applied to a clayey, pouch-type lithium ion secondary battery in which two electrode layers which are clayey positive and negative electrodes, instead of sheet-shaped positive and negative electrodes, are separated by a separator.

### EXAMPLES

Next, the present invention will be specifically described by way of Examples and Comparative Examples, but is not limited to these examples. In Examples, Comparative Examples, and Tables 5 to 8, PC represents propylene carbonate, DMC represents dimethyl carbonate, EC represents ethylene carbonate, EMC represents ethyl methyl carbonate, FEC represents fluoroethylene carbonate, PS represents 1,3-propane sultone, HMDI represents hexamethylene diisocyanate, DCC represents N,N'-dicyclohexylcarbodiimide, LiFSI represents LiN(SO₂F)₂, NCM523 represents LiNi_{0.5}Co_{0.2}Mn_{0.3}O₂, NCM811 represents LiNi_{0.8}Co_{0.1}Mn_{0.1}O₂, and LCO represents LiCoO₂.

### Examples 1-1 to 1-18

### Preparation of Electrolytic Solution

LiPF₆ and LiFSI were dissolved in a nonaqueous solvent in which PC and DMC were mixed at a volume ratio of 1:2. Cyanomethyl formate (CMF) (available from Tokyo Chemical Industry Co., Ltd.) was added to the solution thus obtained to prepare an electrolytic solution of Example 1-1. In the prepared electrolytic solution, the content of CMF was 0.1 mass%, the content of LiPF₆ was 0.5 mol/L, and the content of LiFSI was 0.5 mol/L. Furthermore, electrolytic solutions of Examples 1-2 to 1-18 were prepared so that the contents of CMF in the prepared electrolytic solutions were as shown in Table 5. The mass% of CMF and the mass% of the compound other than CMF in Table 5 represent respective proportions thereof relative to the total mass of the prepared electrolytic solution, and the M (mol/L) of the electrolyte in Table 5 represents a proportion of each electrolyte relative to the total volume of the prepared electrolytic solution. In Examples 1-2 and 1-3, electrolytic solutions were prepared in the same manner as in Example 1-1 except for the content of CMF. In Example 1-4, PC and CMF were mixed at a volume ratio of 1:2, and then LiPF₆ and LiFSI were dissolved, so that the contents of CMF, LiPF₆, and LiFSI were as shown in Table 5. In Example 1-5, an electrolytic solution was prepared in the same manner as in Example 1-1 except that a nonaqueous solvent in which EC and DMC were mixed at a volume ratio of 1:2 was used and that the content of CMF was set to the amount shown in Table 5. In Examples 1-6 to 1-18, LiPF₆ and LiFSI were dissolved in a nonaqueous solvent obtained by mixing PC and DMC at a volume ratio of 1:2, and then CMF and the compound represented by Formula (I), (II), (III), or (IV) of the present invention were added to prepare electrolytic solutions, in which A, B, C, D, E, and F in the compounds are A, B, C, D, E, and F described in the column of the type of compound other than CMF in Table 5. The contents of CMF, these compounds, LiPF₆ and LiFSI in the prepared electrolytic solutions are as shown in Table 5. Examples 1-6 to 1-18 are examples in which the phosphonate, the carbonate, the oxalate, or the methanesulfonate in the present invention was added in addition to CMF.

### Comparative Examples 1-1 to 1-9

Electrolytic solutions of Comparative Examples 1-1 to 1-9 were prepared without adding CMF. In Comparative Example 1-1, an electrolytic solution was prepared in the same manner as in Example 1-1 except that CMF was not added. In Comparative Example 1-2, an electrolytic solution was prepared in the same manner as in Example 1-1 except that octyl formate was added in place of CMF so as to attain the content shown in Table 5. In Comparative Examples 1-4, 1-5, 1-6, 1-7, 1-8 and 1-9, electrolytic solutions were prepared in the same manner as in Examples 1-6, 1-7, 1-8, 1-9, 1-11 and 1-12, respectively, except that CMF was not added. In Comparative Example 1-3, an electrolytic solution was prepared in the same manner as in Comparative Example 1-1, except that a nonaqueous solvent in which EC and DMC were mixed at a volume ratio of 1:2 was used.

### Production of Lithium Ion Secondary Battery (LIB) and Measurement of Battery Characteristics

93 mass% of NCM523 (positive electrode active material), 3 mass% of acetylene black (conductive auxiliary), and 4 mass% of polyvinylidene fluoride (binder) were mixed, and 1-methyl-2-pyrrolidone was added to the mixture to prepare a positive electrode mixture material in the form of a slurry. Then, the positive electrode mixture material was applied onto an aluminum foil. Thereafter, the resulting product was dried and press-molded to prepare a positive electrode. Similarly, 98 mass% of artificial graphite (negative electrode active material), 1 mass% of a copolymer of styrene and butadiene as a binder, and 1 mass% of carboxymethyl cellulose were added to water and mixed to prepare a negative electrode mixture material in the form of a slurry. Then, the negative electrode mixture material was applied onto a copper foil. Thereafter, the resulting product was dried, press-molded and heat-treated to prepare a negative electrode sheet. The separator was a 20-micron microporous film having three layers, with a layer of polyethylene being sandwiched between two layers of polypropylene. The electrolytic solution of each of Examples 1-1 to 1-14 and Comparative Examples 1-1 to 1-9 was injected to produce a coin battery (coin-type LIB having a diameter of 20 mm and a thickness of 3.2 mm).

The coin battery was charged to an upper limit voltage of 4.3 V at a 1C rate of constant current and constant voltage at 25°C and then discharged to a lower limit voltage of 3.0 V at a 1C rate using a charge/discharge device ACD-MO1A (available from Aska Electronic Co., Ltd.) to repeat charge/discharge. The discharge capacity at the 5th cycle was calculated as a relative ratio as compared to the discharge capacity at the 5th cycle in the case where CMF and the compound other than CMF were not added using a nonaqueous solvent in which EC and DMC were mixed at a volume ratio of 1:2 (Comparative Example 1-3). The cycle characteristics (%) were quantified as: the obtained capacities (mAh/g) at 50th cycle/5th cycle × 100. The results are listed in Table 5.

**[Table 5]**

| | Positive electrode | Negative electrode | Electrolyte and solvent | CMF | Compounds other than CMF | | Capacity ratio at 5th cycle | Cycle characteristics (%) |
|---|---|---|---|---|---|---|---|---|
| | | | | mass% | Type | mass% | | |
| Example 1-1 | NCM523 | Graphite | (0.5M LiPF₆ + 0.5M LiFSI) [PC/DMC = 1/2] | 0.1 | Absent | Absent | 0.98 | 100 |
| Example 1-2 | NCM523 | Graphite | (0.5M LiPF₆ + 0.5M LiFSI) [PC/DMC = 1/2] | 1 | Absent | Absent | 1.00 | 100 |
| Example 1-3 | NCM523 | Graphite | (0.5M LiPF₆ + 0.5M LiFSI) [PC/DMC = 1/2] | 10 | Absent | Absent | 1.00 | 100 |
| Example 1-4 | NCM523 | Graphite | (0.5M LiPF₆ + 0.5M LiFSI) [PC/CMF = 1/2] | 56 | Absent | Absent | 1.00 | 100 |
| Comparative Example 1-1 | NCM523 | Graphite | (0.5M LiPF₆ + 0.5M LiFSI) [PC/DMC = 1/2] | 0 | Absent | Absent | 0 | - |
| Comparative Example 1-2 | NCM523 | Graphite | (0.5M LiPF₆ + 0.5M LiFSI) [PC/DMC = 1/2] | 0 | n-Octyl formate | 1 | 0.86 | 92 |
| Comparative Example 1-3 | NCM523 | Graphite | (0.5M LiPF₆ + 0.5M LiFSI) [EC/DMC = 1/2] | 0 | Absent | Absent | 1.00 | 98 |
| Example 1-5 | NCM523 | Graphite | (0.5M LiPF₆ + 0.5M LiFSI) [EC/DMC = 1/2] | 0.5 | Absent | Absent | 1.00 | 100 |
| Comparative Example 1-4 | NCM523 | Graphite | (0.5M LiPF₆ + 0.5M LiFSI) [PC/DMC = 1/2] | 0 | A: -CH₂CH₃, B: -CH₂CH₃ | 1 | 0 | - |
| Example 1-6 | NCM523 | Graphite | (0.5M LiPF₆ + 0.5M LiFSI) [PC/DMC = 1/2] | 1 | A: -CH₂CH₃, B: -CH₂CH₃ | 1 | 1.00 | 100 |
| Comparative Example 1-5 | NCM523 | Graphite | (0.5M LiPF₆ + 0.5M LiFSI) [PC/DMC = 1/2] | 0 | A: -CH₂CH₃, B: -CH₂CN | 1 | 0 | - |
| Example 1-7 | NCM523 | Graphite | (0.5M LiPF₆ + 0.5M LiFSI) [PC/DMC = 1/2] | 1 | A: -CH₂CH₃, B: -CH₂CN | 1 | 1.00 | 100 |
| Comparative Example 1-6 | NCM523 | Graphite | (0.5M LiPF₆ + 0.5M LiFSI) [PC/DMC = 1/2] | 0 | A: -CH₂CH₃, B: -CH=CH₂ | 1 | 0.75 | 88 |
| Example 1-8 | NCM523 | Graphite | (0.5M LiPF₆ + 0.5M LiFSI) [PC/DMC = 1/2] | 1 | A: -CH₂CH₃, B: -CH=CH₂ | 1 | 1.00 | 100 |
| Comparative Example 1-7 | NCM523 | Graphite | (0.5M LiPF₆ + 0.5M LiFSI) [PC/DMC = 1/2] | 0 | A: -CH₂CH₂C≡N, B: -CH₂CH₃ | 1 | 0.22 | 34 |
| Example 1-9 | NCM523 | Graphite | (0.5M LiPF₆ + 0.5M LiFSI) [PC/DMC = 1/2] | 1 | A: -CH₂CH₂C≡N, B: -CH₂CH₃ | 1 | 1.00 | 100 |
| Example 1-10 | NCM523 | Graphite | (0.5M LiPF₆ + 0.5M LiFSI) [PC/DMC = 1/2] | 1 | A: -CH₂C≡CH, B: -CH₂CH₃ | 1 | 1.00 | 100 |
| Comparative Example 1-8 | NCM523 | Graphite | (0.5M LiPF₆ + 0.5M LiFSI) [PC/DMC = 1/2] | 0 | C: -CH₃, D: -CH₂CH₂C≡N | 1 | 0.70 | 20 |
| Example 1-11 | NCM523 | Graphite | (0.5M LiPF₆ + 0.5M LiFSI) [PC/DMC = 1/2] | 1 | C: -CH₃, D: -CH₂CH₂C≡N | 1 | 1.00 | 100 |
| Comparative Example 1-9 | NCM523 | Graphite | (0.5M LiPF₆ + 0.5M LiFSI) [PC/DMC = 1/2] | 0 | C: -CH₃, D: -CH₂C≡CH | 1 | 0.24 | 54 |
| Example 1-12 | NCM523 | Graphite | (0.5M LiPF₆ + 0.5M LiFSI) [PC/DMC = 1/2] | 1 | C: -CH₃, D: -CH₂C≡CH | 1 | 1.00 | 100 |
| Example 1-13 | NCM523 | Graphite | (0.5M LiPF₆ + 0.5M LiFSI) [PC/DMC = 1/2] | 1 | E: -CH₂CH₂C≡N | 0.5 | 1.00 | 100 |
| Example 1-14 | NCM523 | Graphite | (0.5M LiPF₆ + 0.5M LiFSI) [PC/DMC = 1/2] | 1 | E: -CH₂C≡CH | 0.5 | 1.00 | 100 |
| Example 1-15 | NCM523 | Graphite | (0.5M LiPF₆ + 0.5M LiFSI) [PC/DMC = 1/2] | 1 | C: -CH₃, D: -C(CH₃)₂C≡N | 1 | 1.00 | 100 |
| Example 1-16 | NCM523 | Graphite | (0.5M LiPF₆ + 0.5M LiFSI) [PC/DMC = 1/2] | 1 | E: -C(CH₃)₂C≡N | 0.5 | 1.00 | 100 |
| Example 1-17 | NCM523 | Graphite | (0.5M LiPF₆ + 0.5M LiFSI) [PC/DMC = 1/2] | 1 | F: -CH₂C≡CH | 1 | 1.00 | 100 |
| Example 1-18 | NCM523 | Graphite | (0.5M LiPF₆ + 0.5M LiFSI) [PC/DMC = 1/2] | 1 | F: -CH(CH₃)C≡N | 1 | 1.00 | 100 |

From the results in Table 5, even when the PC-based electrolytic solution was used in the battery using the graphite negative electrode, excellent cycle characteristics were obtained by adding CMF to the electrolytic solution (Examples 1-1 to 1-4 and 1-6 to 1-18). On the other hand, in the example in which CMF was not added, destruction of the graphite negative electrode occurred, and the secondary battery could not be satisfactorily charged/discharged (Comparative Example 1-1). In addition, even when n-octyl formate having the same formic acid group as in CMF was added, destruction of the graphite negative electrode partially occurred, and sufficient cycle characteristics as a secondary battery were not obtained (Comparative Example 1-2). Even when the compound selected from the phosphonate, the carbonate, the oxalate, and the methanesulfonate in the present invention was added, destruction of the graphite negative electrode occurred when CMF was not added, and the secondary battery could not be satisfactorily charged/discharged (Comparative Examples 1-4 to 1-9). On the other hand, when these compounds were used in combination with CMF, excellent cycle characteristics were obtained (Examples 1-6 to 1-18). The result of Comparative Example 1-3 using EC as the nonaqueous solvent was used as a reference for determining the discharge capacity ratio at the 5th cycle. However, EC is solid at room temperature while PC is liquid at a low temperature, and thus the improvement in cycle characteristics of the PC-based electrolytic solution can expand the range for the temperature of application of the electrolytic solution. Although the cycle characteristics of Comparative Example 1-3 were 98%, the capacity decreased at the 50th cycle and subsequent cycles. On the other hand, in Example 1-5 in which EC was used as the nonaqueous solvent, the capacity less decreased even at the 50th cycle and subsequent cycles.

### Example 2-1 to 2-16

### Preparation of Electrolytic Solution

LiFSI was dissolved in a nonaqueous solvent in which EC, EMC, and DMC were mixed at a volume ratio of 3:3:4. CMF was added to the solution thus obtained to prepare an electrolytic solution of Example 2-1. In the prepared electrolytic solution, the content of CMF was 1.3 mass%, and the content of LiFSI was 1.2 mol/L. In Example 2-2, an electrolytic solution was prepared in the same manner as in Example 2-1 except that LiPF₆ was added as an electrolyte instead of LiFSI. In Example 2-3, an electrolytic solution was prepared in the same manner as in Example 2-1 except that a nonaqueous solvent in which PC, EMC, and DMC were mixed at a volume ratio of 3:3:4 was used. In Examples 2-4 to 2-16, LiFSI was dissolved in a nonaqueous solvent obtained by mixing EC, EMC and DMC at a volume ratio of 3:3:4, and then CMF and the compound represented by formula (I), (II), (III), or (IV) of the present invention were added to prepare electrolytic solutions, in which A, B, C, D, E, and F are A, B, C, D, E, and F described in the column of the type of compound other than CMF in Table 6. The contents of CMF, these compounds and LiFSI in the prepared electrolytic solutions are as shown in Table 6. Examples 2-4 to 2-16 are examples in which the phosphonate, the carbonate, the oxalate, or the methanesulfonate in the present invention was added in addition to CMF. The mass% of CMF and the mass% of the compound other than CMF in Table 6 represent respective proportions thereof relative to the total mass of the prepared electrolytic solution, and the M (mol/L) of the electrolyte in Table 6 represents a proportion of each electrolyte relative to the total volume of the prepared electrolytic solution.

### Comparative Examples 2-1 to 2-4

Electrolytic solutions of Comparative Examples 2-1 to 2-4 were prepared without adding CMF. In Comparative Example 2-1, an electrolytic solution was prepared in the same manner as in Example 2-1 except that CMF was not added. In Comparative Example 2-2, an electrolytic solution was prepared in the same manner as in Example 2-1 except that octyl formate was added in place of CMF so as to attain the content shown in Table 6. In Comparative Example 2-3, an electrolytic solution was prepared in the same manner as in Example 2-1 except that FEC was added in place of CMF so as to attain the content shown in Table 6. In Comparative Example 2-4, an electrolytic solution was prepared in the same manner as in Example 2-1 except that a compound in which A and B in the compound represented by Formula (I) in the present specification were as shown in Table 6 was added in the content shown in Table 6 instead of CMF.

### Measurement of Corrosion Resistance

In the measurement, a three electrode beaker cell in which a working electrode, a counter electrode, and a reference electrode were Al, Li, and Li, respectively, was used, and each of the electrolytic solutions of Examples 2-1 to 2-12 and Comparative Examples 2-1 to 2-4 was used as an electrolytic solution. The measurement conditions were 25°C, 5 mV/sec and from 4.5 to 3.0 V, and the current values in up to 10 cycles were determined by cyclic voltammetry (CV). The corrosion resistance was quantified as: the obtained current values at 10th cycle/2nd cycle × 100 (%). The results are listed in Table 6.

**[Table 6]**

| | Electrolyte and solvent | CMF | Compounds other than CMF | | Corrosion resistance (%) |
|---|---|---|---|---|---|
| | | mass% | Type | mass% | |
| Example 2-1 | 1.2M LiFSI [EC/EMC/DMC = 3/3/4] | 1.3 | Absent | Absent | 93 |
| Comparative Example 2-1 | 1.2M LiFSI [EC/EMC/DMC = 3/3/4] | 0 | Absent | Absent | 173 |
| Comparative Example 2-2 | 1.2M LiFSI [EC/EMC/DMC = 3/3/4] | 0 | n-Octyl formate | 2.4 | 209 |
| Comparative Example 2-3 | 1.2M LiFSI [EC/EMC/DMC = 3/3/4] | 0 | FEC | 1.7 | 230 |
| Comparative Example 2-4 | 1.2M LiFSI [EC/EMC/DMC = 3/3/4] | 0 | A: -CH2CH3, B:-CH₂COOC₂H₅ | 3.4 | 240 |
| Example 2-2 | 1.2M LiPF6 [EC/EMC/DMC = 3/3/4] | 1.3 | Absent | Absent | 19 |
| Example 2-3 | 1.2M LiFSI [PC/EMC/DMC = 3/3/4] | 1.3 | Absent | Absent | 89 |
| Example 2-4 | 1.2M LiFSI [EC/EMC/DMC = 3/3/4] | 1.3 | A: -CH₂CH₃, B: -CH₂CH₃ | 2.6 | 22 |
| Example 2-5 | 1.2M LiFSI [EC/EMC/DMC = 3/3/4] | 1.3 | A: -CH₂CH₃, B: -CH₂CN | 2.7 | 19 |
| Example 2-6 | 1.2M LiFSI [EC/EMC/DMC = 3/3/4] | 1.3 | A: -CH₂CH₃, B: -CH=CH₂ | 2.6 | 42 |
| Example 2-7 | 1.2M LiFSI [EC/EMC/DMC = 3/3/4] | 1.3 | A: -CH₂CH₂C≡N, B: -CH₂CH₃ | 3 | 21 |
| Example 2-8 | 1.2M LiFSI [EC/EMC/DMC = 3/3/4] | 1.3 | A: -CH₂C≡CH, B: -CH₂CH₃ | 2.9 | 74 |
| Example 2-9 | 1.2M LiFSI [EC/EMC/DMC = 3/3/4] | 1.3 | C: -CH₃, D: -CH₂CH₂C≡N | 2 | 49 |
| Example 2-10 | 1.2M LiFSI [EC/EMC/DMC = 3/3/4] | 1.3 | C: -CH₃, D: -CH₂C≡CH | 1.7 | 25 |
| Example 2-11 | 1.2M LiFSI [EC/EMC/DMC = 3/3/4] | 1.3 | E: -CH₂CH₂C≡N | 3 | 88 |
| Example 2-12 | 1.2M LiFSI [EC/EMC/DMC = 3/3/4] | 1.3 | E: -CH₂C≡CH | 2.1 | 78 |
| Example 2-13 | 1.2M LiFSI [EC/EMC/DMC = 3/3/4] | 1.3 | C: -CH₃, D: -CH(CH₃)C≡N | 2 | 34 |
| Example 2-14 | 1.2M LiFSI [EC/EMC/DMC = 3/3/4] | 1.3 | E: -CH(CH₃)C≡N | 3 | 82 |
| Example 2-15 | 1.2M LiFSI [EC/EMC/DMC = 3/3/4] | 1.3 | F: -CH₂C≡CH | 2 | 74 |
| Example 2-16 | 1.2M LiFSI [EC/EMC/DMC = 3/3/4] | 1.3 | F: -CH(CH₃)C≡N | 3 | 79 |

From the results shown in Table 6, the examples (Examples 2-1, 2-2, and 2-3) in which CMF was added to the electrolytic solution showed a decreased numerical value indicating the corrosion resistance and an improved corrosion resistance, as compared with the example (Comparative Example 2-1) in which CMF was not added. Furthermore, the examples (Examples 2-4 to 2-16) in which the compound selected from the phosphonate, the carbonate, the oxalate, and the methanesulfonate in the present invention was added in addition to CMF showed a decreased numerical value indicating the corrosion resistance and a further improved corrosion resistance. As described above, from the results shown in Table 6, it has been found that the use of CMF decreases the numerical value representing the corrosion resistance and can improve the corrosion resistance of LIB. Further, it has been found that, when the supplementary combination of the compound selected from the phosphonate, the carbonate, the oxalate, and the methanesulfonate described in the present invention with CMF further decreases the numerical value representing the corrosion resistance and can further improve the corrosion resistance of LIB.

On the other hand, it has been found that the corrosion resistance was remarkably deteriorated, in all of Comparative Example 2-2 in which n-octyl formate, as described in Patent Document 2, having the same formic acid group as in CMF was added, Comparative Example 2-3 in which FEC having a fluorine group was added, and Comparative Example 2-4 in which B having the same phosphonic acid skeleton but falling outside the scope of the present invention was -CH₂COOC₂H₅. From this fact, all compounds having a formic acid group or a phosphonic acid skeleton cannot necessarily be used, and the combination with a specific skeleton is important.

### Example 3-1

LiFSI, LiPF₆, LiPO₂F₂, and LiOSO₃CH₃ were dissolved in a nonaqueous solvent in which EC, PC, PS, EMC, and DMC were mixed at a volume ratio of 2:1:0.5:3:3.5. CMF and the compound represented by Formula (II) of the present invention in which C and D are C and D described in the column of the type of compound other than CMF in Table 7 were added to the solution thus obtained to prepare an electrolytic solution. The contents of CMF, the compound other than CMF, LiFSI, LiPF₆, LiPO₂F₂, and LiOSO₃CH₃ in the prepared electrolytic solution were as shown in Table 7. The mass% of CMF and the mass% of the compound other than CMF in Table 7 represent respective proportions thereof relative to the total mass of the prepared electrolytic solution, and the M (mol/L) of the electrolyte in Table 7 represents a proportion of each electrolyte relative to the total volume of the prepared electrolytic solution. The prepared electrolytic solution and the positive electrode active material and negative electrode active material shown in Table 7 were used to produce a coin battery similar to that of Example 1-1, and the battery characteristics were measured. In addition, a three electrode beaker cell similar to that of Example 2-1 was produced, and the corrosion resistance was measured. The results are listed in Table 7.

### Example 3-2

LiFSI was dissolved in a nonaqueous solvent in which PC, FEC, and CMF were mixed at a volume ratio of 1:1:8. The compound represented by Formula (I) of the present invention in which A and B are A and B described in the column of the type of compound other than CMF in Table 7 was added to the solution thus obtained to prepare an electrolytic solution. The contents of CMF, the compound other than CMF, and LiFSI in the prepared electrolytic solution were as shown in Table 7. A coin battery was produced using the prepared electrolytic solution and the positive electrode active material and negative electrode active material shown in Table 7. Acetylene black was used as a conductive material of a negative electrode active material, PVDF was used as a binder, a mass ratio among the negative electrode active material, the conductive material, and the binder was 85:10:5, and N-methylpyrrolidone was used as a solvent to produce a slurry. The prepared slurry was applied to an aluminum foil, dried, press-molded and heat-treated to obtain a negative electrode sheet, and a coin battery similar to that of Example 3-1 was produced. The charge/discharge conditions were changed to charge at 45°C at a 1C rate of constant current and constant voltage up to an upper limit voltage of 2.8 V and then discharge at the 1C rate up to a lower limit voltage of 1.4 V, and the battery characteristics were measured. In addition, a three electrode beaker cell similar to that of Example 2-1 was produced, and the corrosion resistance was measured. The results are listed in Table 7.

**[Table 7]**

| | Positive electrode | Negative electrode | Electrolyte and solvent | CMF | Compounds other than CMF | | Temperature (°C) | Cycle characteristics (%) | Corrosion resistance (%) |
|---|---|---|---|---|---|---|---|---|---|
| | | | | mass% | Type | mass% | | | |
| Example 3-1 | NCM811 | Graphite | (0.7M LiFSI + 0.3M LiPF₆ + 0.06M LiPO₂F₂ + 0.04M LiOSO₃CH₃) [EC/PC/PS/EMC/DMC = 2/1/0.5/3/3.5] | 3 | C: -CH₃ | 5 | 25 | 100 | 24 |
| | | | | | D: -CH₂C≡CH | | | | |
| Example 3-2 | NCM811 | LTO | 1M LiFSI [PC/FEC/CMF = 1/1/8] | 66 | A: -CH₂CH₃ | *5* | 45 | 100 | 15 |
| | | | | | B: -CH₂CN | | | | |

From Table 7, it has been found that the cycle characteristics and the corrosion resistance are improved even by a nonaqueous electrolytic solution containing FEC which is a fluorine-containing compound and 1,3-propane sultone (PS) which is an SO₃-containing compound in addition to LiFSI which is highly corrosive.

### Example 4-1

LiFSI, LiPF₆, and LiOSO₃CH₃ were dissolved in a nonaqueous solvent in which EC, EMC, and DMC were mixed at a volume ratio of 3:3:3. CMF and the compound represented by Formula (II) of the present invention in which C and D are C and D described in the column of the type of compound other than CMF in Table 8 were added to the solution thus obtained to prepare an electrolytic solution. The contents of CMF, the compound other than CMF, LiFSI, and LiPF₆ in the prepared electrolytic solution were as shown in Table 8. The mass% of CMF and the mass% of the compound other than CMF in Table 8 represent respective proportions thereof relative to the total mass of the prepared electrolytic solution, and the M (mol/L) of the electrolyte in Table 8 represents a proportion of each electrolyte relative to the total volume of the prepared electrolytic solution. A coin battery similar to that of Example 1-1 was produced using the prepared electrolytic solution and the positive electrode active material and negative electrode active material shown in Table 8. The charge/discharge conditions were changed to charge at 25°C at a 1C rate of constant current and constant voltage to an upper limit voltage of 4.45 V and then discharge at the 1C rate to a lower limit voltage of 3.0 V. Then, the battery characteristics were measured. In addition, a three electrode beaker cell similar to that of Example 2-1 was produced, and the corrosion resistance was measured. The results are listed in Table 8.

### Example 4-2

An electrolytic solution was prepared in the same manner as in Example 4-1 except that a part of EMC was changed to ethyl formate and that LiFSI, LiPF₆, and LiOSO₃CH₃ were dissolved in a nonaqueous solvent obtained by mixing EC, EMC, DMC, and ethyl formate at a volume ratio of 3:2:4:1, and the battery characteristics and the corrosion resistance were measured. The content of each component in the electrolytic solution and the measurement results are shown in Table 8. In Example 4-2, a compound represented by formula (III) in which E is E described in the column of the type of compound other than CMF in Table 8 and a compound represented by Formula (IV) in which F is F described in the column of the type of compound other than CMF in Table 8 were added.

**[Table 8]**

| | Positive electrode | Negative electrode | Electrolyte and solvent | CMF | Compounds other than CMF | | Temperature (°C) | Cycle characteristics (%) | Corrosion resistance (%) |
|---|---|---|---|---|---|---|---|---|---|
| | | | | mass% | Type | mass% | | | |
| Example 4-1 | LCO | Graphite | | 2 | C:-CH₃ | | 25 | 100 | 19 |
| | | | (0.7M LiFSI + 0.3M LiPF₆ + 0.04M LiOSO₃CH₃) | | D: -CH(CH₃)C≡N | 1 | | | |
| | | | | | Succinonitrile | 2 | | | |
| | | | [EC/EMC/DMC = 3/3/4] | | HMDI | 0.5 | | | |
| Example 4-2 | LCO | Graphite | (0.7M LiFSI + 0.3M LiPF₆ + 0.04M LiOSO₃CH₃) | 1 | E: -CH(CH₃)C≡N | 1 | 25 | 100 | 26 |
| | | | | | F: -CH₂C≡CH | 1 | | | |
| | | | [EC/EMC/DMC/ethyl formate = 3/2/4/1] | | Adiponitrile | 2 | | | |
| | | | | | DCC | 0.5 | | | |

### Example 4-3

An electrolytic solution was prepared in the same manner as in Example 4-2 except that CMF was changed to 2-cyanoethyl formate (CEF), and the battery characteristics and the corrosion resistance were measured. The content of each component in the electrolytic solution and the measurement results are shown in Table 9.

**[Table 9]**

| | Positive electrode | Negative electrode | Composition (volume ratio) of electrolytic solution | CEF (wt%) | Compounds other than CEF | Added amount (wt%) | Temperature (°C) | Cycle characteristics (%) | Corrosion resistance (%) |
|---|---|---|---|---|---|---|---|---|---|
| Example 4-3 | LCO | Graphite | (0.7M LiFSI + 0.3M LiPF₆ + 0.04M LiOSO₃CH₃) | 1 | E: -CH(CH₃)C≡N | 1 | 25 | 100 | 32 |
| | | | | | F: -CH₂C≡CH | 1 | | | |
| | | | [EC/EMC/DMC/ethyl formate = 3/2/4/1] | | Adiponitrile | 2 | | | |
| | | | | | DDC | 0.5 | | | |

From Table 8 and Table 9, it has been found that the cycle characteristics and the corrosion resistance are improved even in a battery having a high voltage of the upper limit voltage of 4.45 V. From the results of Tables 7 to 9, it is expected that excellent cycle characteristics and corrosion resistance are achieved for a long period of time even when a large number of LIBs such as vehicle-mounted batteries.

### INDUSTRIAL APPLICABILITY

The use of the nonaqueous electrolytic solution of the present invention has become possible to provide excellent battery characteristics such as battery cycle characteristics and safety such as corrosion resistance. The present invention gives incalculable contribution when a large number of lithium ion secondary batteries such as vehicle-mounted batteries are used for a long period of time.

## Claims

1. An electrolytic solution for a lithium ion secondary battery, the electrolytic solution containing an electrolyte dissolved in a nonaqueous solvent, wherein the electrolytic solution contains cyanomethyl formate and/or 2-cyanoethyl formate.

2. The electrolytic solution for a lithium ion secondary battery according to claim 1, wherein the electrolytic solution contains at least one selected from the group consisting of:
a phosphonate compound represented by Formula (I): 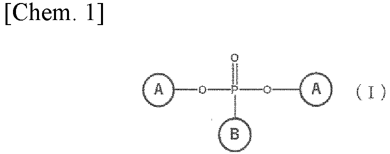
where A and B are independent, A represents a methyl group, an ethyl group, a 2-cyanoethyl group, a 1-cyanoethyl group, a 2-cyano-2-propyl group, or a 2-propynyl group, and B represents a methyl group, an ethyl group, a vinyl group, or a cyanomethyl group;
a carbonate compound represented by Formula (II): 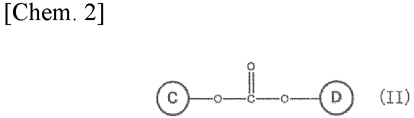
where C and D are independent, C represents a methyl group or an ethyl group, and D represents a 2-cyanoethyl group, a 1-cyanoethyl group, a 2-cyano-2-propyl group, or a 2-propynyl group;
an oxalate compound represented by Formula (III): 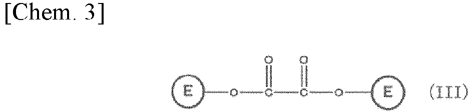
where E represents a 2-cyanoethyl group, a 1-cyanoethyl group, a 2-cyano-2-propyl group, or a 2-propynyl group; and
a methanesulfonate compound represented by Formula (IV): 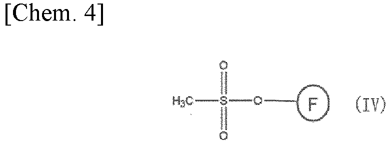
where F represents a 2-cyanoethyl group, a 1-cyanoethyl group, a 2-cyano-2-propyl group, or a 2-propynyl group.

3. The electrolytic solution for a lithium ion secondary battery according to claim 2, wherein a total content of the phosphonate compound represented by Formula (I), the carbonate compound represented by Formula (II), the oxalate compound represented by Formula (III), and the methanesulfonate compound represented by Formula (IV) is from 0.01 to 10 mass%.

4. A lithium ion secondary battery comprising a positive electrode, a negative electrode, a separator, and the electrolytic solution for a lithium ion secondary battery according to any one of claims 1 to 3.
